# EUROPÄISCHE PATENTSCHRIFT

(11) **EP 1 712 386 B1**
(45) Veröffentlichungstag und Bekanntmachung des Hinweises auf die Patenterteilung: **30.10.2013**
(21) Anmeldenummer: 06006643.8
(22) Anmeldetag: 30.03.2006
(51) Int. Cl.: B60J 5/04

(54) **Kraftfahrzeug mit einer um eine etwa vertikale Achse schwenkbaren Hecktüre**
Motor vehicle which a rear-door pivoting about an approximately vertical axis
Véhicule automobile avec un hayon pivotant autour d'un axe approximativement vertical

(30) Priorität: 15.04.2005 DE 102005017444; 13.09.2005 DE 102005043581
(43) Veröffentlichungstag der Anmeldung: 18.10.2006
(73) Patentinhaber: Wilhelm Karmann GmbH, 49084 Osnabrück (DE)
(72) Erfinder: Bunsmann, Winfried, 49143 Bissendorf (DE); Brockhoff, Franz-Ulrich, 49565 Bramsche (DE); Klein, Jochen, 48153 Münster (DE); Nentwig, Wolfgang, 48488 Emsbüren (DE); Grave, Markus, D-49536 Lienen (DE)
(74) Vertreter: Kronthaler, Schmidt & Coll.

(56) Entgegenhaltungen:
- WO-A-98/46442
- DE-A1- 19 860 556
- FR-A- 2 688 824
- US-B1- 6 196 617

## Beschreibung

Die Erfindung betrifft ein Kraftfahrzeug mit einer mittels wenigstens eines Scharniers an einem seitlichen hinteren Pfosten der Fahrzeugstruktur um eine etwa vertikale Achse schwenkbar befestigten Hecktüre.

Personenkraftwagen mit einem großen Gepäckraum, der gegebenenfalls durch Zusammenlegen von Rücksitzen zusätzlich vergrößerbar ist, erfreuen sich zunehmender Beliebtheit. Für eine gute Beladbarkeit des vielseitig nutzbaren Gepäckraums weisen solche Kraftfahrzeuge eine um eine etwa horizontale Achse schwenkbare Heckklappe bzw. Hecktüre auf, die mittig geteilt sein kann und oben und unten an der Fahrzeugstruktur angeschlagen ist. Alternativ kann eine oder können zwei Hecktüren vorgesehen sein, die um eine etwa vertikale Achse schwenkbar an der Fahrzeugstruktur angeschlagen sind. Ein Personenkraftwagen, der eine um eine etwa vertikale Achse schwenkbare Hecktür vorsieht, ist in der gattungsgemäßen US 6,196,617 B1 gezeigt. Dabei ist die Hecktür über ein Scharnier an einer sich am Ende des Fahrzeugs befindlichen Öffnung angebracht. Das Scharnier enthält ein erstes Verbindungselement, das an der Hecktür angeschlagen ist, ein zweites Verbindungselement, das schwenkbar an der Fahrzeugkarosserie angeschlagen ist und ein Zwischenbogenelement, das sich zwischen dem ersten und dem zweiten Verbindungselement befindet.

Personenkraftwagen, die eine um eine etwa vertikale Achse schwenkbare Hecktür aufweisen, sind ferner aus der DE 198 60 556 B4 und der FR 2 688 824 A1 bekannt.

Personenkraftwagen mit zwei um eine etwa vertikale Achse schwenkbaren Hecktüren sind aus der WO 98/46442 A 1 bekannt. Dabei sind die beiden schwenkbaren Hecktüren über zwei Scharniere, ein oberes Scharnier und ein unteres Scharnier, an der Fahrzeugkarosserie angeschlagen. Die oberen Scharniere sind an dem oberen Ende der schwenkbaren Hecktüren und die unteren Scharniere an den unteren Enden der schwenkbaren Hecktüren angeordnet.

Insbesondere um vertikale Achsen schwenkbare Hecktüren beschränken die stilistischen Möglichkeiten, da beispielsweise bei im Bereich der Rückscheibe stark eingezogener Form des Fahrzeugs Scharniere nur im Bereich des Türkörpers unter der Gürtellinie angeordnet sein können. Die Höhe des Türkörpers ist durch den Abstand zwischen der Unterkante der Heckscheibe und der Oberkante des hinteren Stoßfängers beschränkt. Zusätzlich sind in diesem Bereich Rückleuchten angeordnet, die vielfältige gesetzliche Bestimmungen erfüllen müssen.

Der Erfindung liegt die Aufgabe zugrunde, ein Kraftfahrzeug mit einer mittels wenigstens eines Scharniers an einem seitlichen hinteren Pfosten der Fahrzeugstruktur um eine etwa vertikale Achse schwenkbar befestigten Hecktüre zu schaffen, das bezüglich der stilistischen Möglichkeiten weitgehende Freiheiten bietet.

Eine erste Lösung dieser Aufgabe wird mit einem Kraftfahrzeug gemäß dem Anspruch 1 erzielt.

Bei dem erfindungsgemäßen Kraftfahrzeug befindet sich ein mit der Heckklappe verbundenes bzw. mit dieser ausschwenkendes Scharnierteil (ein anderes Scharnierteil ist mit einem seitlichen hinteren Pfosten der Fahrzeugstruktur verbunden) im Bereich einer seitlichen Rückleuchte oder bildet selbst die seitliche Rückleuchte oder einen Teil von ihr. Dies hat zwar den Nachteil, dass die im Bereich des Scharniers liegende Rückleuchte beim Öffnen der Heckklappe im Allgemeinen verdeckt wird, so dass aus gesetzlichen Gründen eine weitere Rückleuchte an der Scharnierseite vorhanden sein muss, die beim Öffnen der Hecktüre nicht verdeckt wird. Der große Vorteil der erfindungsgemäßen Konstruktion liegt jedoch darin, dass dem Stilist weitgehende Freiheiten eröffnet sind und zusätzlich die Hecktüre so an dem Fahrzeug angeschlagen werden kann, dass eine große Durchladebreite erzielt wird.

Die Unteransprüche 2 bis 4 sind auf vorteilhafte Ausführungsformen und Weiterbildungen des Kraftfahrzeugs gemäß Anspruch 1 gerichtet.

Weitere Lösungen der der Erfindung zugrundeliegenden Aufgabe wird mit einem Kraftfahrzeug gemäß den Ansprüchen 5 und 7 erzielt.

Bei der Ausführungsform gemäß dem Anspruch 7 ist die Rückleuchte oder ein Teil von ihr nicht an einem zum Heckklappenscharnier gehörenden Scharnierteil befestigt, sondern ist mittels eines eigenen Scharniers schwenkbar. Auch bei dieser Ausführungsform des Kraftfahrzeuges befindet sich wie bei der Ausführungsform gemäß dem Patentanspruch 1 ein zusammen mit der Hecktüre ausschwenkendes Scharnierteil des Hecktürenscharniers bei geschlossener Hecktüre bevorzugt im Bereich einer seitlichen Rückleuchte des Fahrzeuges.

Die Unteransprüche 8 und 9 sind auf vorteilhafte Ausführungsformen und Weiterbildungen des Kraftfahrzeuges gemäß dem Anspruch 7 gerichtet.

Die Erfindung wird im Folgenden anhand schematischer Zeichnungen beispielsweise und mit weiteren Einzelheiten erläutert.

In den Figuren stellen dar:
- Fig. 1 bis 14: unterschiedliche Ansichten verschiedener Ausführungsformen erfindungsgemäßer Kraftfahrzeuge,
- Fig. 16: eine perspektivische Ansicht eines Teils einer weiteren Ausführungsform eines erfindungsgemäßen Kraftfahrzeuges, und
- Fig. 17 und 18: einen in dem Kraftfahrzeug gemäß Fig. 16 verwendeten Scharniermechanismus in unterschiedlichen Stellungen.

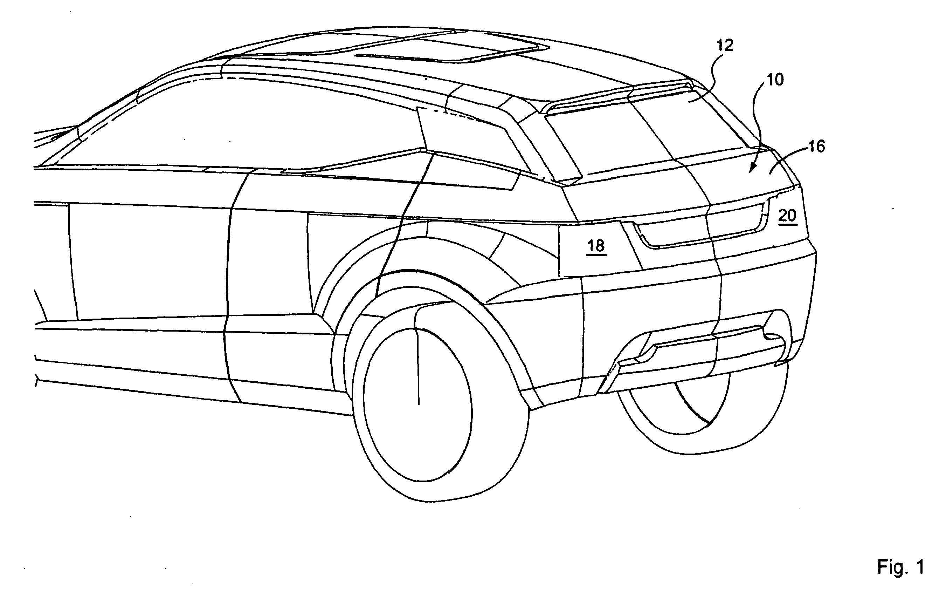

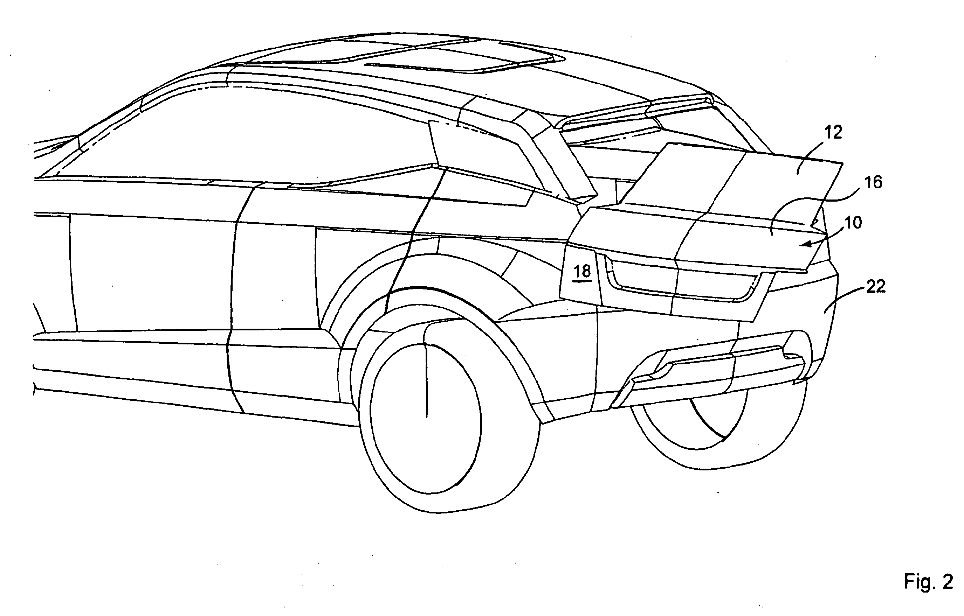

Eine erste Ausführungsform ist in den Figuren 1 und 2 dargestellt, wobei die Figur 1 eine Ansicht schräg von hinten eines Kraftfahrzeugs bei geschlossener Türe zeigt und die Figur 2 das Fahrzeug gemäß Figur 1 bei geöffneter Hecktüre zeigt.

Gemäß den Figuren 1 und 2 weist ein als Kombi ausgebildetes Kraftfahrzeug an seiner Rückseite eine Türe 10 auf, die gemäß Figur 1 an ihrer linken Seite um eine etwa vertikale Achse schwenkbar an einem nicht dargestellten hinteren Seitenpfosten der Fahrzeugstruktur befestigt ist. Wie ersichtlich, ist der Heckbereich des Fahrzeugs im Bereich des Heckfensters 12 oberhalb der Gürtellinie stark eingezogen bzw. nach vorne geneigt. Außerdem ist ein hinterer Stoßfänger 14 bzw. dessen Außenverkleidung verhältnismäßig hoch gezogen, so dass die Höhe des eigentlichen Türkörpers 16 verhältnismäßig klein ist. Zusätzlich sind im Bereich des Türkörpers 16 seitliche Rückleuchten 18 und 20 angeordnet. Damit steht für Scharniere, mit denen die Hecktüre 10 linksseitig am Wagenkörper bzw. Heckpfosten angeschlagen ist, kaum Platz zur Verfügung. Die Erfindung löst dieses Problem dadurch, dass das Scharnier im Bereich der linken Rückleuchte 18 selbst angeordnet wird, wie in Figur 2 ersichtlich.

Das Scharnier, das im einzelnen nicht dargestellt ist, ist in seinem Aufbau an sich bekannt und weist vorzugsweise einen starr mit dem hinteren linken Pfosten der Fahrzeugstruktur verbundenen Scharnierteil auf, der schwenkbar mit einem weiteren Scharnierteil verbunden ist, das vorzugsweise starr mit der Hecktüre 10 bzw. mit dem Türkörper 16 verbunden ist. Wie aus Figur 2 ersichtlich, ist die Rückleuchte 18 vollständig an dem mit der Hecktüre verbundenen Scharnierteil angebracht bzw. in diesen integriert. Somit klappt beim Öffnen der Hecktüre die linke Rückleuchte 18 mit heraus, wohingegen die rechte Rückleuchte 20 fahrzeugfest ist.

Wie weiter aus der Figur 2 ersichtlich, ist die linke Rückleuchte 18 bei geöffneter Hecktüre nach hinten nicht mehr sichtbar, was gesetzlichen Vorschriften widersprechen kann. Um dieses Problem zu beseitigen, ist beispielsweise linksseitig in der Stoßfängerverkleidung 22 eine weitere Rückleuchte (nicht dargestellt) untergebracht, die bei geöffneter Hecktüre nach hinten sichtbar ist und Leuchtkammern und Leuchten zur Erfüllung entsprechender gesetzlicher Vorschriften aufweist. Alternativ kann in der gemäß Figur 2 nach hinten sichtbaren rechtsseitigen Türseite der Hecktüre 10 eine weitere Rückleuchte vorhanden sein, die beim Öffnen der Hecktüre, sobald die Rückleuchte 18 nach hinten nicht mehr sichtbar ist, selbsttätig angeschaltet wird, so dass die gesetzlichen Erfordernisse erfüllt sind.

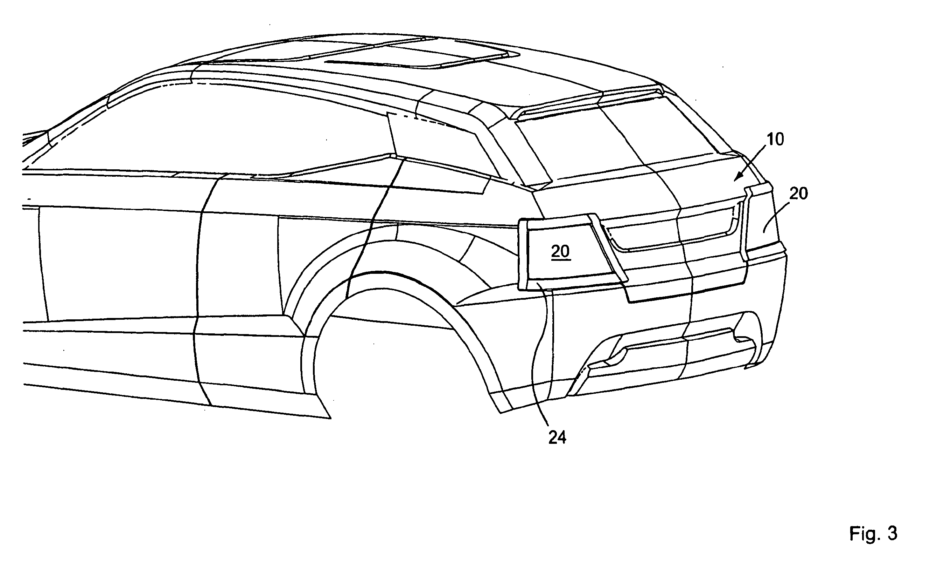

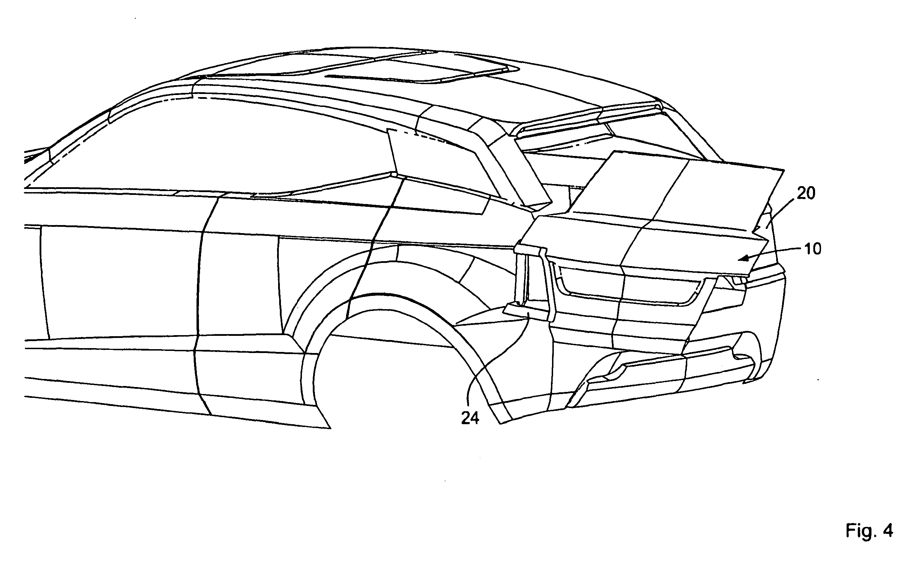

Während bei der Ausführungsform gemäß Figuren 1 und 2 die Rückleuchte 18 selbst einen Bestandteil des mit der Hecktüre verbundenen Scharnierteils bildet, ist bei der Ausführungsform gemäß Figuren 3 und 4 die Rückleuchte 20 mit ihrem Gehäuse, den Leuchtkammern und den Leuchten fahrzeugfest, jedoch von einem Rahmen 24 umgeben, der im geschlossenen Zustand der Heckklappe 10 die Leuchte 20 zumindest teilweise umgibt und vorteilhafterweise selbst den starr mit der Heckklappe 10 verbundenen Scharnierteil bildet.

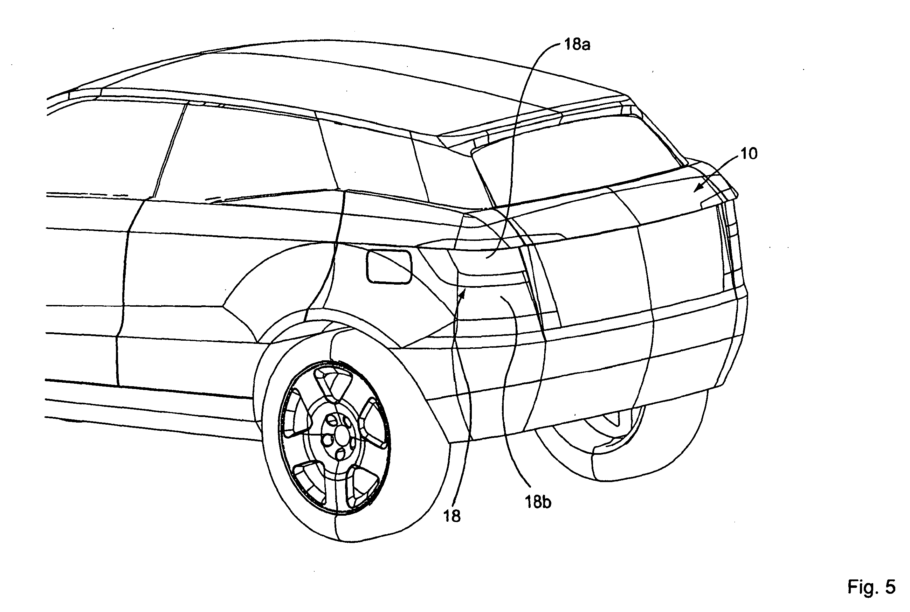

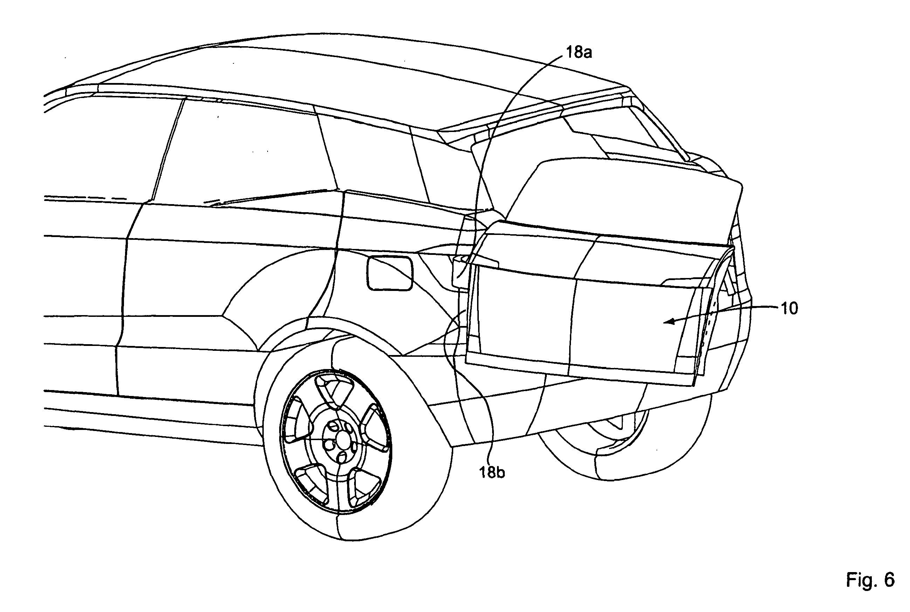

Die Figuren 5 und 6 zeigen eine weitere Ausführungsform, bei der die Rückleuchte 18 in der Horizontalen unterteilt ist und einen Oberteil 18a enthält, der an dem mit der Hecktüre 10 verbundenen Scharnierteil angebracht ist, und einen fahrzeugstrukturfesten Leuchtenunterteil 18b, der beim Öffnen der Hecktüre 10 ortsfest bleibt.

Es versteht sich, dass unterschiedlichste Unterteilungen der Rückleuchte 18 möglich sind, wobei jeweils ein Teil der Rückleuchte fahrzeugstrukturfest und ein anderer Teil hecktürenfest ist und eine Scharnierachse durch die Heckleuchte hindurchgeht.

Wie aus dem Vorstehenden ersichtlich, ist die Hecktüre über nur ein Scharnier, das mit der Rückleuchte zusammengefasst ist, an dem linken hinteren Pfosten der Fahrzeugstruktur befestigt. Dieses Scharnier kann je nach Erfordernissen der Kinematik ein Einachs- oder Mehrachs- bzw. Mehrgelenkscharnier sein.

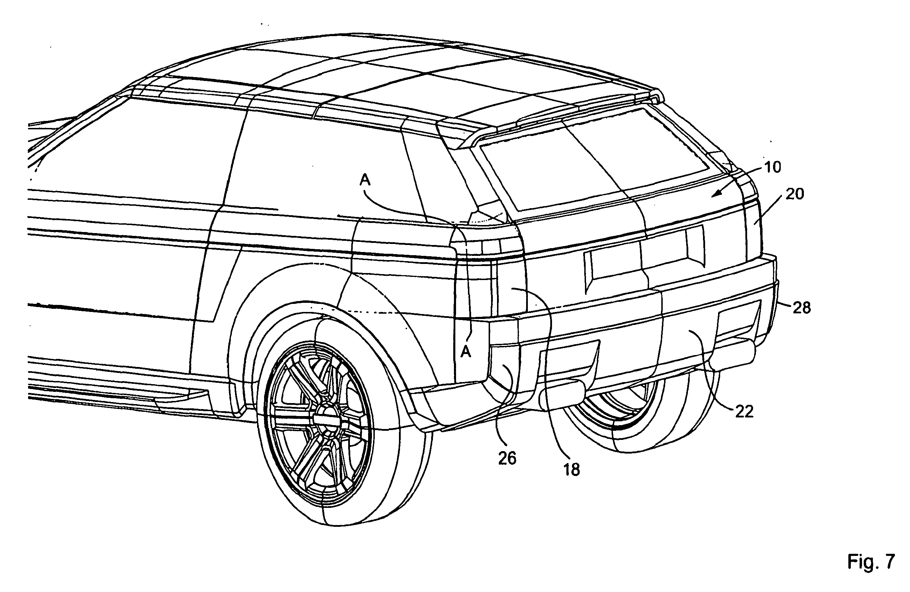

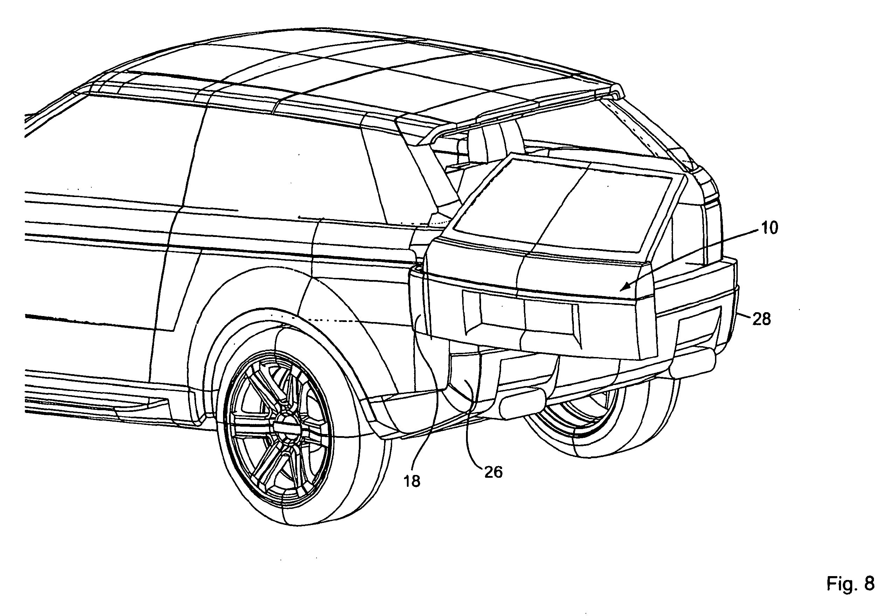

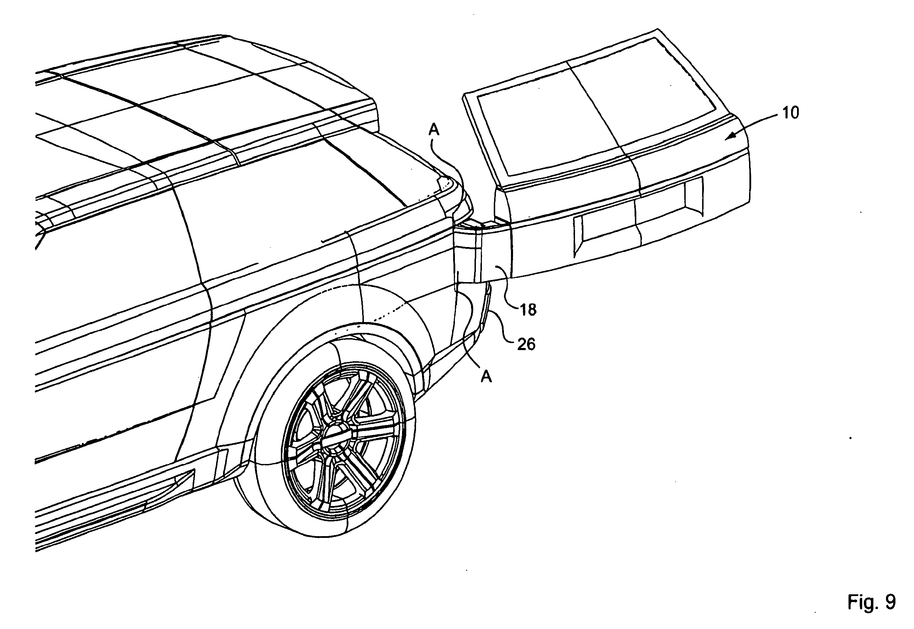

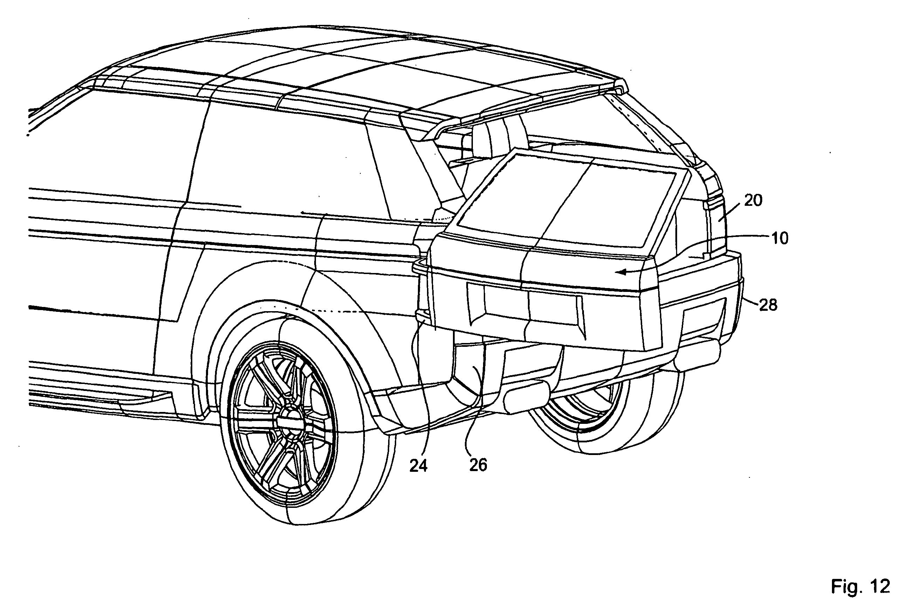

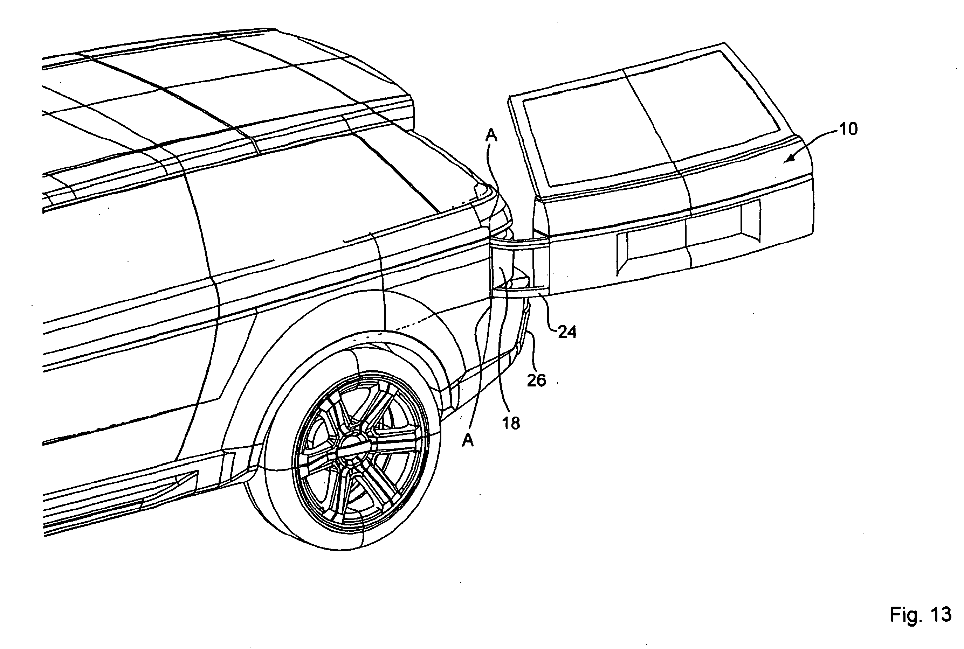

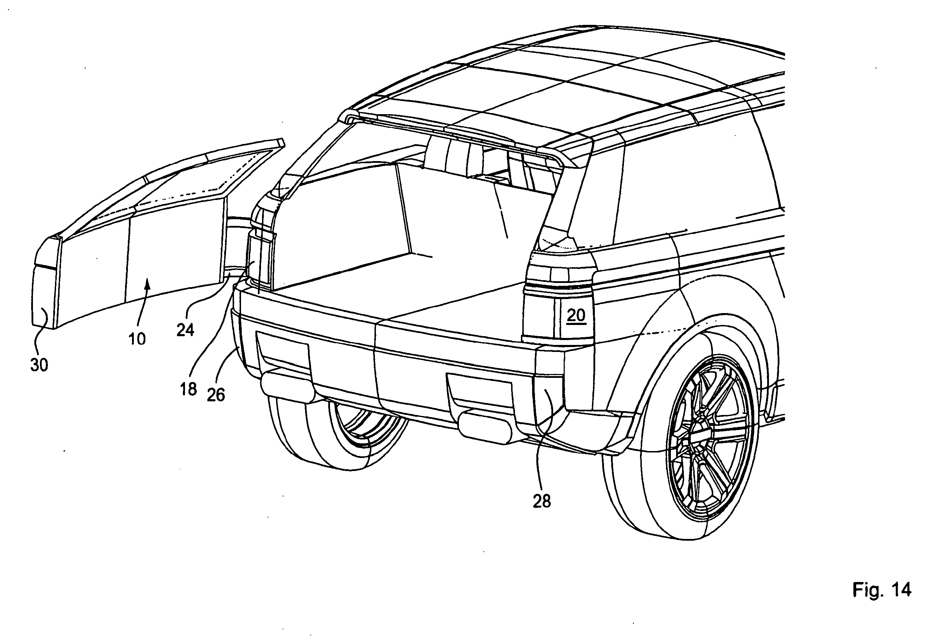

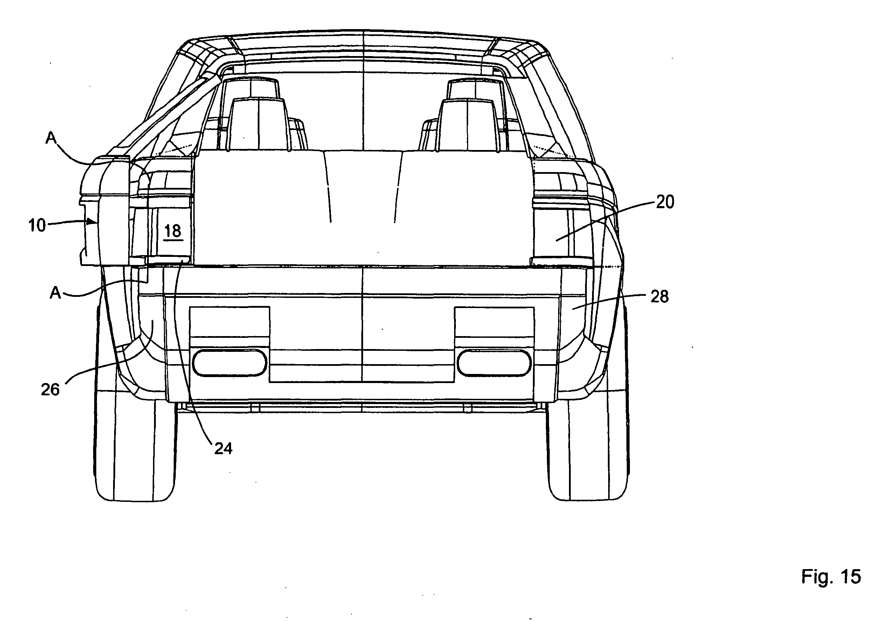

Die Figuren 7 bis 15 zeigen die Erfindung in ihrer Anwendung für ein anderes Fahrzeug, das im Bereich der Stoßfängerverkleidung 22 mit Rückleuchten 26 und 28 versehen ist, die bei geöffneter Hecktüre sichtbar sind. Die Hecktüre 10 ist wiederum, wie bei den Ausführungsformen gemäß Figuren 1 bis 6 linksseitig über ein Scharnier an dem nicht dargestellten hinteren Pfosten der Fahrzeugstruktur befestigt. Die Scharnierachse, um die die Hecktüre 10 beim Öffnen verschwenkt, ist jeweils mit A-A bezeichnet; ansonsten werden in den Figuren 7 bis 15 die gleichen Bezugszeichen wie in den vorhergehenden Figuren verwendet.

Bei der Ausführungsform gemäß Figuren 7 bis 10 ist die Rückleuchte 18 wiederum starr mit einem Scharnierteil verbunden, das starr an der Hecktüre 10 angebracht ist und relativ zum Fahrzeugkörper um die Achse A-A verschwenkbar ist. Es versteht sich, dass die Hecktüre 10 mit dem gegenüber dem Fahrzeugkörper verschwenkbaren Scharnierteil, der die Rückleuchte 18 enthält, schwenkbar verbunden sein könnte, so dass die Heckklappe 10 insgesamt um etwa 270° an die linke Seite der Fahrzeugkarosserie heranschwenkbar wäre.

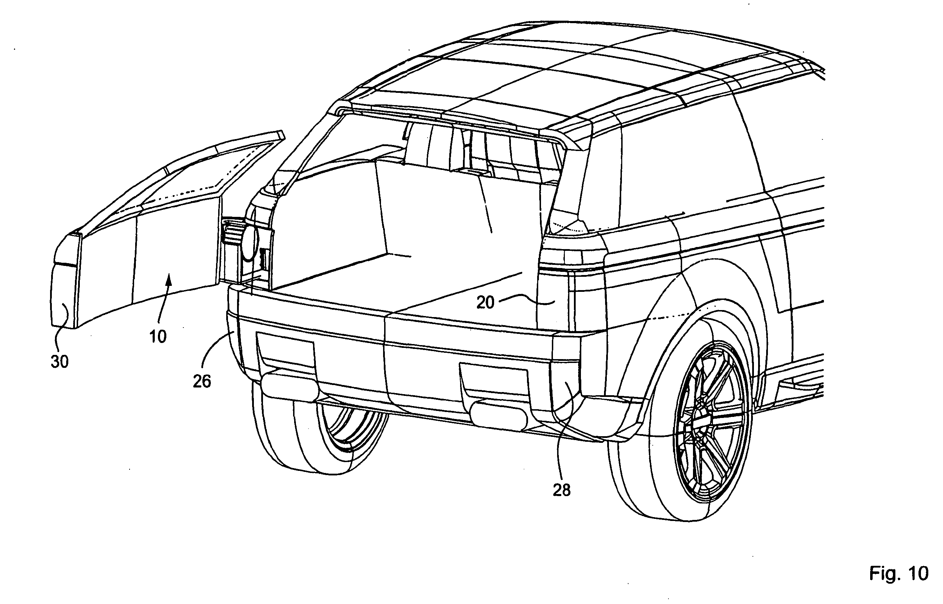

In Figur 10 ist gut ein seitlicher Bereich 30 der Heckklappe sichtbar, in dem eine Rückleuchte an Stelle der Rückleuchte 26 angebracht werden könnte, die bei geöffneter Hecktüre voll sichtbar ist. Die Rückleuchten 26 und 28 könnten in diesem Fall, falls gesetzlich zulässig, entfallen.

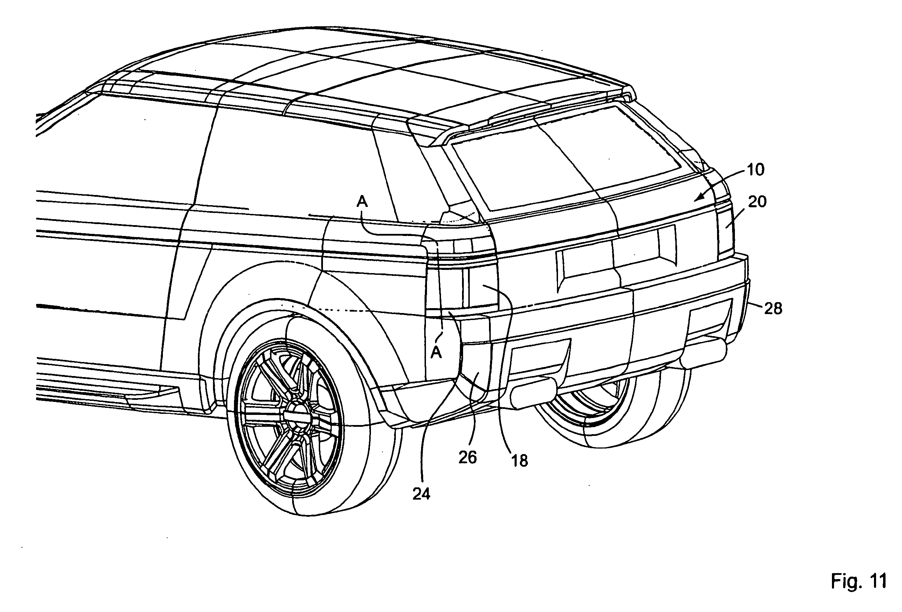

Die Figuren 11 bis 14 zeigen eine Ausführungsform des Fahrzeugs, bei dem der die Hecktüre mit der Fahrzeugstruktur verbindende Scharnierteil ähnlich wie bei der Ausführungsform gemäß Figuren 3 und 4 als Rückleuchtenrahmen 24 ausgebildet ist, der die ansonsten karosseriefeste Rückleuchte 18 bei geschlossener Hecktüre 10 umschließt. Es versteht sich, dass die Rückleuchten 18 und 20 symmetrisch zueinander gestaltet sind, wobei der Rahmen der rechten Rückleuchte 20 keine Scharnierfunktion übernimmt.

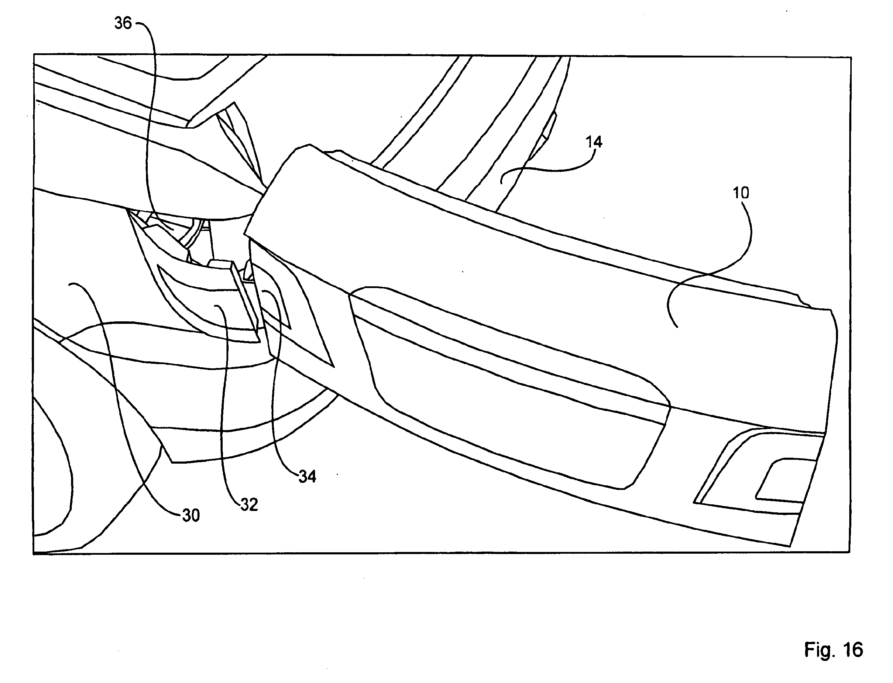

Fig. 16 zeigt eine weitere Ausführungsform eines erfindungsgemäßen Kraftfahrzeuges. Dargestellt ist eine perspektivische Ansicht mit geöffneter Hecktüre 10, die ähnlich den bereits geschilderten Ausführungsformen über ein Scharnier an einem hinteren seitlichen Karosseriepfosten bzw. der hinteren seitlichen Karosseriestruktur befestigt ist. Ein hinteres, äußeres Karosserieseitenteil ist mit 30 bezeichnet. Weiter ist in Fig. 16 deutlich sichtbar eine hintere seitliche Rückleuchte 32, die mittels eines eigenen Scharniers an der Karosseriestruktur ebenfalls um eine etwa senkrechte Achse schwenkbar befestigt ist und beim Öffnen bzw. Ausschwenken der Hecktüre 10 ebenfalls ausschwenkt, so dass sie der Schwenkbewegung der Hecktüre 10 nicht im Wege steht. Ähnlich wie bei den bereits beschriebenen Ausführungsformen überdeckt die Heckleuchte 32 im geschlossenen Zustand der Hecktüre 10 vorzugsweise einen Ausschnitt 36 im Karosserieseitenteil 30. Zusätzlich kann (hier nicht dargestellt) ein weiterer Ausschnitt im äußeren Randbereich 34 der Hecktüre 10 vorgesehen sein.

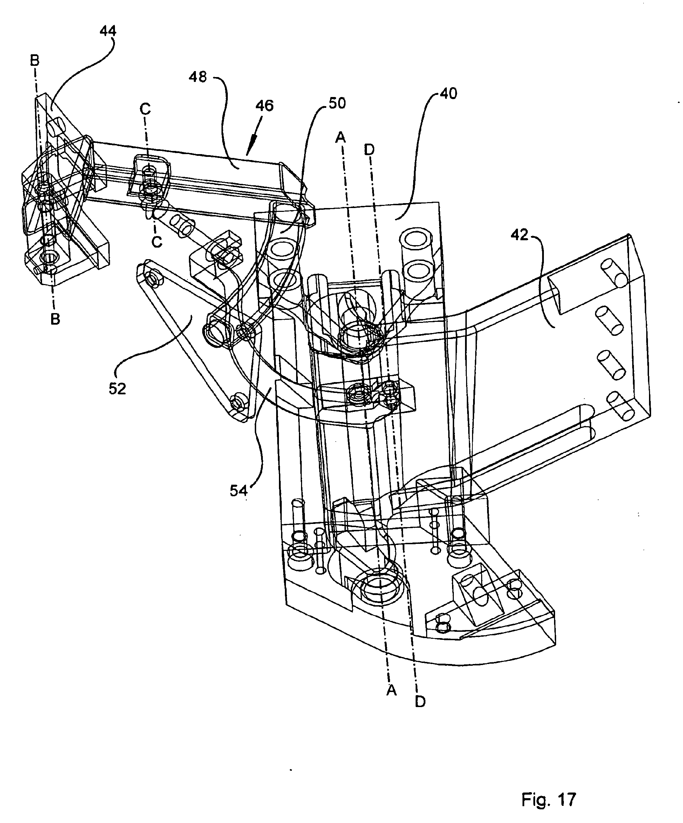

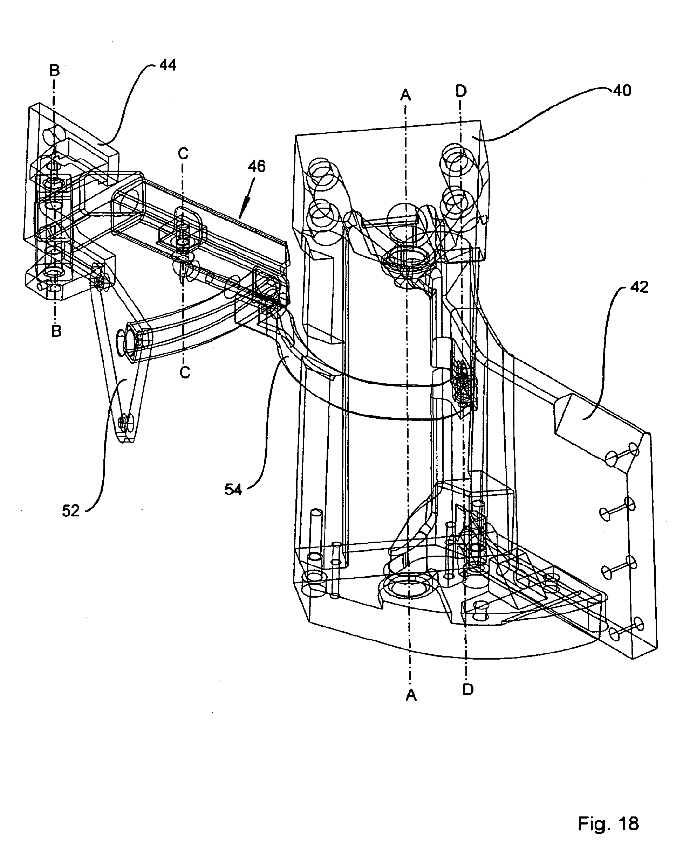

Die Fig. 17 und 18 zeigen den Scharniermechanismus, mit dem die Hecktüre 10 und die Rückleuchte 32 an der in den Fig. 17 und 18 nicht dargestellten Karosseriestruktur angebracht sind.

Gemäß Fig. 17 ist ein erster Scharnierteil 40 eines Heckklappenscharniers starr mit der Karosseriestruktur verbunden, beispielsweise verschraubt oder verschweißt, und ein an dem ersten Scharnierteil 40 um eine Schwenkachse A-A schwenkbarer zweiter Scharnierteil 42, der eine Tragkonsole für die Hecktüre 10 bildet, ist starr mit der Hecktüre 10 (Fig. 16) verbunden. Die Achse A-A ist etwa senkrecht.

Weiter ist mit der Karosseriestruktur ein erster Scharnierteil 44 eines Rückleuchtenscharniers starr verbunden, an dem um eine Schwenkachse B-B schwenkbar ein zweiter Scharnierteil 46 des Rückleuchtenscharniers schwenkbar gelagert ist. Die Drehachse B-B befindet sich vorteilhafterweise bezüglich der Fahrzeuglängsrichtung vor und seitlich außerhalb der Schwenkachse A-A. Der zweite Scharnierteil 46 weist einen an dem ersten Scharnierteil 44 schwenkbar gelagerten Arm 48 auf, von dem nach hinten ein auswärts gebogener Arm 50 abgeht, der in einer Tragkonsole 52 endet, an dem die Rückleuchte 32 befestigbar ist.

Mit dem ersten Arm 48 ist ein Koppelhebel 54 um eine von der Achse B-B verschiedene Achse C-C schwenkbar verbunden, der mit dem zweiten Scharnierteil 42 um eine von der Achse A-A verschiedene Achse D-D schwenkbar verbunden ist.

Fig. 17 zeigt die Anordnung bei geschlossener Hecktüre 10 und einwärts verschwenkter Rückleuchte 32. Dabei überdeckt die Rückleuchte 32 den Ausschnitt 36, in den die Bauteile 44, 48, 50, 52, 54, 40 und Teile von 42 aufgenommen sind.

Fig. 18 zeigt die Anordnung in der gem. Fig. 16 geöffneten Stellung der Hecktüre 10 und ausgeschwenkter Rückleuchte 32. Wie ersichtlich, ist die Anlenkung des Koppelhebels 54 an dem Arm 48 und dem zweiten Scharnierteil 42 derart, dass bei einem Öffnen der Hecktüre (Verschwenken des zweiten Scharnierteils 42) in Uhrzeigerrichtung auch der zweite Scharnierteil 46 mit der Tragkonsole 52 der Rückleuchte 32 in Uhrzeigerrichtung aus der Karosserie heraus geschwenkt wird, so dass die Rückleuchte der Öffnung der Hecktüre 10 nicht im Wege steht.

Die anhand der Fig. 16 bis 18 beschriebene eigene Schwenkbarkeit der Rückleuchte 32 kann in vielfältiger Weise abgeändert werden. Beispielsweise kann die Rückleuchte an der Hecktüre 10 schwenkbar befestigt werden. Weiter muss die Schwenkachse B-B nicht zwingend parallel zur Schwenkachse A-A sein, sondern kann die Rückleuchte beispielsweise um eine etwa waagerechte Achse geschwenkt werden. Der Koppelhebel 54 kann durch einen Mehrgelenkmechanismus geeigneter Bauart ersetzt werden, der das Verschwenken der Rückleuchte an das Verschwenken bzw. Öffnen der Hecktüre koppelt. Alternativ kann ein eigener motorischer Antrieb zum Verschwenken der Rückleuchte vorgesehen sein, der beim Öffnen bzw. Schließen der Hecktüre aktiviert wird.

Die beispielhaft beschriebene Erfindung kann in vielfältiger Weise abgeändert werden. Beispielsweise kann die Hecktüre eines Fahrzeugs mittig geteilt werden und die Hecktürenhälften können rechtsseitig und linksseitig am Fahrzeug angeschlagen werden, wobei in diesem Falle die rechtsseitige und linksseitige Rückleuchte als Scharnierteil gestaltet oder in das Scharnier integriert ist. In den Figuren nicht dargestellt ist eine hochgesetzte dritte Bremsleuchte, die beispielsweise in den oberen Querholm eines Heckfensterrahmens oder einen fahrzeugfesten Heckspoiler integriert ist.

### BEZUGSZEICHENLISTE

- 10: Hecktüre
- 12: Heckscheibe
- 14: Stoßfänger
- 16: Türkörper
- 18: Rückleuchte
- 20: Rückleuchte
- 22: Stoßfängerverkleidung
- 24: Rahmen
- 26: Rückleuchte
- 28: Rückleuchte
- 30: Karosserieseitenteil
- 32: Rückleuchte
- 34: Ausschnitt
- 36: Ausschnitt
- 40: erster Scharnierteil
- 42: zweiter Scharnierteil
- 44: erster Scharnierteil
- 46: zweiter Scharnierteil
- 48: Arm
- 50: Arm
- 52: Tragkonsole
- 54: Koppelhebel

## Patentansprüche

1. Kraftfahrzeug mit einer mittels wenigstens eines Scharniers an einem seitlichen hinteren Pfosten der Fahrzeugstruktur um eine etwa vertikale Achse (A-A) schwenkbar befestigten Hecktüre (10),
wobei
ein zusammen mit der Hecktüre ausschwenkendes Scharnierteil sich bei geschlossener Hecktüre (10) im Bereich einer seitlichen Rückleuchte (18) des Fahrzeugs befindet,
**dadurch gekennzeichnet, dass** wenigstens ein Teil der seitlichen Rückleuchte (18) an dem Scharnier befestigt ist, so dass wenigstens ein Teil der seitlichen Rückleuchte (18) beim Verschwenken der Hecktüre (10) mit verschwenkt wird.

2. Kraftfahrzeug nach Anspruch 1,
wobei
die Hecktüre (10) mittels nur eines Scharniers an der Fahrzeugstruktur befestigt ist.

3. Kraftfahrzeug nach Anspruch 1 oder 2,
wobei
die Rückleuchte (18) vollständig in dem zusammen mit der Hecktüre (10) ausschwenkenden Scharnierteil enthalten ist.

4. Kraftfahrzeug nach einem der Ansprüche 1 bis 3,
wobei
das Kraftfahrzeug an der Scharnierseite der Hecktüre (10) eine bei offener Hecktüre von hinten frei sichtbare Rückleuchte (26) aufweist.

5. Kraftfahrzeug mit einer mittels wenigstens eines Scharniers (40, 42) an einem seitlichen hinteren Pfosten der Fahrzeugstruktur um eine etwa vertikale Achse schwenkbar befestigten Hecktüre (10) und einer seitlichen Rückleuchte (32), **dadurch gekennzeichnet, dass** die seitliche Rückleuchte (32) mittels wenigstens eines weiteren Scharniers (44, 46) schwenkbar an der Hecktüre oder dem seitlichen hinteren Pfosten der Fahrzeugstruktur befestigt ist, wobei das wenigstens eine weitere Scharnier (44, 46) mit dem Scharnier (40, 42) der Hecktüre (10) mittels einer Koppelvorrichtung (54) derart gekoppelt ist, dass die Schwenkbewegung der Rückleuchte (32) durch die Schwenkbewegung der Hecktüre betätigt ist, so dass wenigstens ein Teil der seitlichen Rückleuchte (32) beim Verschwenken der Hecktüre (10) mit verschwenkt wird.

6. Kraftfahrzeug nach Anspruch 5,
wobei
die Rückleuchte (32) mittels des wenigstens einen weiteren Scharniers (44, 46) um eine etwa senkrechte Achse schwenkbar an dem seitlichen hinteren Pfosten befestigt ist.

7. Kraftfahrzeug mit einer mittels wenigstens eines Scharniers an einem seitlichen hinteren Pfosten der Fahrzeugstruktur um eine etwa vertikale Achse (A-A) schwenkbar befestigten Hecktüre (10),
wobei
ein zusammen mit der Hecktüre ausschwenkendes Scharnierteil sich bei geschlossener Hecktüre (10) im Bereich einer seitlichen Rückleuchte (18) des Fahrzeugs befindet, **dadurch gekennzeichnet, dass** ein mit der Hecktüre (10) ausschwenkendes Scharnierteil ein die fahrzeugfeste Rückleuchte (18) in geschlossenem Zustand der Hecktüre umschließender Rahmen (24) ist.

8. Kraftfahrzeug nach Anspruch 7,
wobei
die Hecktüre (10) mittels nur eines Scharniers an der Fahrzeugstruktur befestigt ist.

9. Kraftfahrzeug nach einem der Ansprüche 7 oder 8,
wobei
das Kraftfahrzeug an der Scharnierseite der Hecktüre (10) eine bei offener Hecktüre von hinten frei sichtbare Rückleuchte (26) aufweist.

## Claims

1. A motor vehicle comprising a tailgate (10) which is mounted to a lateral rear pillar of the vehicle structure by at least one hinge so as to pivot about a vertical axis (A-A), wherein a hinge element which pivots outwards together with the tailgate is located in the area of a lateral rear light (18) of the vehicle when the tailgate (10) is closed,
**characterised in that**
at least part of the lateral rear light (18) is fixed to the hinge so that at least part of the lateral rear light (18) is also pivoted when the tailgate (10) is pivoted.

2. The motor vehicle according to claim 1, wherein the tailgate (10) is fixed to the vehicle structure by only one hinge.

3. The motor vehicle according to claim 1 or 2, wherein the rear light (18) is fully contained in the hinge element which pivots outwards together with the tailgate (10).

4. The motor vehicle according to any one of claims 1 to 3, wherein the motor vehicle comprises, on the side of the hinge of the tailgate (10), a rear light (26) which is freely visible from behind when the tailgate is open.

5. A motor vehicle comprising a tailgate (10), which is mounted to a lateral rear pillar of the vehicle structure by at least one hinge (40, 42) so as to pivot about an approximately vertical axis, and a lateral rear light (32), **characterised in that** the lateral rear light (32) is fixed to the tailgate or to the lateral rear pillar of the vehicle structure by at least one additional hinge (44, 46) so as to pivot, wherein said at least one additional hinge (44, 46) is coupled with the hinge (40, 42) of the tailgate (10) by means of a coupling device (54) such that the pivoting movement of the rear light (32) is actuated by the pivoting movement of the tailgate, so that at least part of the lateral rear light (32) is also pivoted when the tailgate (10) is pivoted.

6. The motor vehicle according to claim 5, wherein the rear light (32) is fixed to the lateral rear pillar by the at least one additional hinge (44, 46) so as to pivot about an approximately perpendicular axis.

7. A motor vehicle comprising a tailgate (10), which is fixed to a lateral rear pillar of the vehicle structure by at least one hinge so as to pivot about an approximately vertical axis (A-A), wherein a hinge element which pivots outwards together with the tailgate (10) is located in the area of a lateral rear light (18) of the vehicle, **characterised in that** a hinge element pivoting outwards together with the tailgate (10) is a frame (24) enclosing the vehicle-mounted rear light (18) when the tailgate is closed.

8. The motor vehicle according to claim 7, wherein the tailgate (10) is fixed to the vehicle structure by only one hinge.

9. The motor vehicle according to any one of claims 7 or 8, wherein the motor vehicle comprises, on the side of the hinge of the tailgate (10), a rear light (26) which is freely visible from behind when the tailgate is open.

## Revendications

1. Véhicule automobile comprenant un hayon (10) monté sur un montant latéral arrière de la structure du véhicule par au moins une charnière de manière à pouvoir basculer autour d'un axe vertical (A-A), un élément de charnière basculant vers l'extérieur ensemble avec le hayon étant disposé dans la région d'une lanterne arrière latérale (18) du véhicule lorsque le hayon (10) est fermé,
**caractérisé en ce que**
la lanterne arrière latérale (18) est au moins partiellement fixée sur la charnière de sorte qu'au moins une partie de la lanterne arrière latérale (18) bascule ensemble avec le basculement du hayon (10).

2. Véhicule automobile selon la revendication 1, dans lequel le hayon (10) est fixé sur la structure du véhicule par une seule charnière.

3. Véhicule automobile selon la revendication 1 ou 2, dans lequel la lanterne arrière (18) est entièrement contenue dans l'élément de charnière qui bascule vers l'extérieur ensemble avec le hayon (10).

4. Véhicule automobile selon l'une quelconque des revendications 1 à 3, ledit véhicule automobile comprenant, du côté de la charnière du hayon (10), une lanterne arrière (26) librement visible de l'arrière lorsque le hayon est ouvert.

5. Véhicule automobile comprenant un hayon (10), qui est monté sur un montant latéral arrière de la structure du véhicule par au moins une charnière (40, 42) de manière à pouvoir basculer autour d'un axe environ vertical, et une lanterne arrière latérale (32), **caractérisé en ce que** la lanterne arrière latérale (32) est fixée sur le hayon ou sur le montant latéral arrière de la structure du véhicule par au moins une charnière additionnelle (44, 46) de manière à pouvoir basculer, ladite au moins une charnière additionnelle (44, 46) étant couplée avec la charnière (40, 42) du hayon (10) au moyen d'un dispositif de couplage (54) de sorte que le basculement de la lanterne arrière (32) soit actionné par le basculement du hayon, de sorte qu'au moins une partie de la lanterne arrière latérale (32) bascule ensemble avec le basculement du hayon (10).

6. Véhicule automobile selon la revendication 5, dans lequel la lanterne arrière (32) est fixée sur le montant latéral arrière par l'au moins une charnière additionnelle (44, 46) de manière à pouvoir basculer autour d'un axe environ perpendiculaire.

7. Véhicule automobile comprenant un hayon (10), qui est fixé sur un montant latéral arrière de la structure du véhicule par au moins une charnière de manière à pouvoir basculer autour d'un axe environ vertical (A-A), une élément de charnière qui bascule vers l'extérieur ensemble avec le hayon (10) étant disposé dans la région d'une lanterne arrière latérale (18) du véhicule, **caractérisé en ce qu'**un élément de charnière basculant vers l'extérieur ensemble avec le hayon (10) est un cadre (24) qui, lorsque le hayon est fermé, entoure la lanterne arrière (18) fixée sur le véhicule.

8. Véhicule automobile selon la revendication 7, dans lequel le hayon (10) est fixé sur la structure du véhicule par une seule charnière.

9. Véhicule automobile selon l'une quelconque des revendications 7 ou 8, le véhicule automobile comprenant, du côté de la charnière du hayon (10), une lanterne arrière (26) librement visible de l'arrière lorsque le hayon est ouvert.
